(19) Europäisches Patentamt European Patent Office Office européen des brevets

(11) **EP 4 210 397 B1**

(12) **EUROPEAN PATENT SPECIFICATION**

(45) Date of publication and mention of the grant of the patent:
**08.04.2026 Bulletin 2026/15**

(21) Application number: **22803158.9**

(22) Date of filing: **17.10.2022**

(51) International Patent Classification (IPC):
*H04W 52/02* (2009.01)    *H04W 4/80* (2018.01)
*H04W 4/02* (2018.01)    *H04W 88/02* (2009.01)
*H04R 1/10* (2026.01)

(52) Cooperative Patent Classification (CPC):
**H04W 4/80; H04W 4/38;** H04W 52/0254;
H04W 52/028; Y02D 30/70

(86) International application number:
**PCT/KR2022/015764**

(87) International publication number:
**WO 2023/096161 (01.06.2023 Gazette 2023/22)**

(54) **ELECTRONIC DEVICE FOR BLUETOOTH COMMUNICATION AND OPERATION METHOD THEREOF**

ELEKTRONISCHE VORRICHTUNG ZUR BLUETOOTH-KOMMUNIKATION UND BETRIEBSVERFAHREN DAFÜR

DISPOSITIF ÉLECTRONIQUE DESTINÉ À LA COMMUNICATION BLUETOOTH ET SON PROCÉDÉ DE FONCTIONNEMENT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **26.11.2021 KR 20210166038**
**30.12.2021 KR 20210192502**

(43) Date of publication of application:
**12.07.2023 Bulletin 2023/28**

(73) Proprietor: **Samsung Electronics Co., Ltd.**
**Gyeonggi-do 16677 (KR)**

(72) Inventor: **YUN, Sangchul**
**Suwon-si, Gyeonggi-do 16677 (KR)**

(74) Representative: **HGF**
**HGF Limited**
**4th Floor, 1 City Square**
**Leeds LS1 2ES (GB)**

(56) References cited:
WO-A1-2021/198936      KR-A- 20110 033 528
KR-A- 20140 063 182      KR-A- 20140 118 202
KR-A- 20160 031 311      KR-B1- 100 862 186
US-A1- 2014 171 053      US-B1- 9 936 456

**Description**

**[Technical Field]**

Embodiments of the disclosure relate to an electronic device for performing Bluetooth communication and a method of operating the same.

**[Background Art]**

Bluetooth (BT) communication technology is used in many electronic devices, for positioning and short-range connection to peripheral devices. The BT communication technology enables electronic devices to be connected to each other to exchange data or information. The BT communication technology may include Bluetooth legacy (or Bluetooth classic) communication technology or Bluetooth low energy (BLE) communication technology and have various connection types of topologies such as piconet or scatternet.

Recently, electronic devices using the BT communication technology have been widely used. For example, a pair of earbuds wearable on both ears of a user are widely used as a BT-based two-ear split wireless audio device. The two-ear split wireless audio device may provide a variety of functions. For example, the two-ear split wireless audio device may include a microphone to identify a user's voice and transmit data of the user's voice to an electronic device (e.g., a smartphone). In addition, the two-ear split wireless audio device may include a speaker and output audio data received from an electronic device (e.g., a smartphone) through the speaker.

A BT device such as a wireless audio device may be connected to a peer device based on BT communication to perform the above operations. BT communication may include a Bluetooth legacy (or Bluetooth classic) scheme or a BLE scheme. In order to connect to the peer device, the BT device may perform an inquiry operation and/or an inquiry scan operation based on Bluetooth legacy, or an advertising operation and/or a scan operation based on BLE.

The inquiry operation may refer to an initial operation of connection in which an inquiry packet is repeatedly transmitted until a response is received from a peer device or a time-out occurs. The inquiry scan operation may refer to an operation of monitoring reception of an inquiry packet on a designated physical channel. Upon receipt of an inquiry packet through the inquiry scan operation, an earbud may transmit an inquiry response packet including its own information.

The BLE advertising operation may refer to an operation of periodically broadcasting an advertising packet on an advertising physical channel, and the BLE scan operation may refer to an operation of monitoring reception of an advertising packet.

US 2014/171053 A1 discusses an apparatus which may include a sensor, a processor circuit and an adaptive scanning component. WO 2021/198936 A1 discusses a visitor management system. US 9936456 B1 discusses a method to facilitate power consumption management of a station by enabling and disabling wireless chains.

**[Disclosure]**

**[Technical Problem]**

Bluetooth low energy (BLE) finds its applications in many fields due to the advantages of convenient connection between electronic devices, and low power in connection between an electronic device and a hub and connection between an electronic device and an Internet of things (IoT) device. To provide BLE service, BLE scan and BLE advertising are used. For BLE scan, a scan window (a time period during which scanning is performed) and a scan interval (a waiting time between scan operations) may be specified. Because BLE scan and BLE advertising may cause an operation interval or latency, a BLE full scan mode is used in a service requiring real-time operations. The BLE full scan mode may increase power consumption and thus decrease battery efficiency by continuously performing a real-time BLE scan operation.

When the user stays in one place, such as early in the morning or during class characterized by small movement, an electronic device may continuously receive the same advertising packets, resulting in unnecessary power consumption due to BLE full scan. Continuous BLE full scan in a state where there is no valid location change between an electronic device performing BLE scan and an electronic device performing advertisement is not beneficial in a real use scenario.

Moreover, the electronic device may be configured to use an external low noise amplifier (LNA) that amplifies a weak received signal, when identifying Bluetooth (BT) signals having a cyclic redundancy check (CRC) error and a low received signal strength indicator (RSSI). However, when there are a plurality of BLE devices around the electronic device, the electronic device may detect one or more BT signals having a CRC error and a low RSSI, thereby continuously driving the external LNA. The continuous driving of the external LNA causes power waste.

Embodiments of the disclosure may reduce power consumption caused by BLE scan in an electronic device.

Embodiments of the disclosure may control radio frequency (RF) performance such as low noise amplification or power amplification for a BLE operation.

Embodiments of the disclosure may control an RF operation for BT communication based on sensor data in an electronic device.

**[Technical Solution]**

The scope of protection of the present invention is defined by the appended independent claims. Optional features are specified by the dependent claims.

**[Description of the Drawings]**

FIG. 1 is a block diagram illustrating an electronic device in a network environment according to various embodiments.

FIG. 2 is a diagram illustrating Bluetooth-based connections in a wireless communication network according to an embodiment.

FIG. 3 is a block diagram illustrating the configuration of a first electronic device in a wireless communication network according to an embodiment.

FIG. 4 is a diagram illustrating a scan procedure for a Bluetooth low energy (BLE) service according to an embodiment.

FIG. 5 is a block diagram illustrating the configuration of an electronic device 201 that performs Bluetooth operation control according to an embodiment.

FIG. 6 is a diagram illustrating Bluetooth operation control in an electronic device according to an embodiment.

FIG. 7 is a diagram illustrating a signal flow for Bluetooth operation control in an electronic device according to an embodiment.

FIG. 8 is a flowchart illustrating an operation of an electronic device according to an embodiment.

FIG. 9 is a flowchart illustrating Bluetooth operation control in an electronic device according to an embodiment.

FIG. 10 is a flowchart illustrating Bluetooth operation control based on a battery level and movement according to an embodiment.

FIG. 11 is a diagram illustrating a control command generated in the electronic device 201 according to an embodiment.

FIG. 12 is a diagram illustrating control of a low noise amplifier (LNA) for a Bluetooth operation according to an embodiment.

**[Mode for Invention]**

Preferred embodiments of the disclosure will be described below with reference to the attached drawings. Lest it should obscure the subject matter of the disclosure, a detailed description of a generally known function or structure of the disclosure will be avoided. Although the terms as described later are defined in consideration of functions in the disclosure, the terms may be changed according to the intention of a user or an operator, or customs. Therefore, the definitions should be made by the meaning of each term lying within.

The technical terms as used in the disclosure are provided merely to describe specific embodiments, not intended to limit the scope of the disclosure. Further, unless otherwise defined, the technical terms as used in the disclosure should be interpreted as the same meanings as generally understood by those skilled in the art, and should not be interpreted as excessively inclusive or excessively narrow meanings. In addition, the general terms used in the disclosure should be interpreted as defined in dictionaries or according to the context, and should not be interpreted as excessively narrow meanings.

Singular forms used in the disclosure include plural referents unless the context clearly dictates otherwise. In this application, the term "have", "may have", "include", or "may include" should not be interpreted as necessarily including multiple components or steps described in the specification, and should be interpreted as excluding some of the components or steps or further including additional components or steps.

Further, the terms including first or second as used in the disclosure may be used to describe various components, and the components should not be limited by the terms. The terms are used only for the purpose of distinguishing one component from another. For example, a first component may be called a second component, and vice versa without departing from the scope of the disclosure.

When it is said that a component is "connected to" or "coupled to" another component, the component may be connected or coupled to the other component directly or with a third component in between. On the other hand, when it is said that a component is "directly connected to" or "directly coupled to" another component, it should be understood that there is no third component in between.

Preferred embodiments of the disclosure will be described with reference to the attached drawings. Like reference numerals are assigned to the same or similar components irrespective of the drawing numbers, and in this regard, a redundant description will be avoided. Further, a detailed description of a known technology will be omitted lest it should obscure the subject matter of the disclosure. Further, it should be noted that the attached drawings are presented merely to help understanding of the disclosure, and should not be construed as limiting the disclosure. The disclosure should be interpreted as encompassing all modifications and alternatives in addition to the attached drawings.

Although a terminal will be described below with reference to the drawings, the terminal may also be referred to as an electronic device, a mobile station, a mobile equipment (ME), a user equipment (UE), a user terminal (UT), a subscriber station (SS), a wireless device, a handheld device, and an access terminal (AT). In addition, the mobile station may be a device equipped with a communication function, such as a portable phone, a personal digital assistant (PDA), a smartphone, a wireless MODEM, and a laptop computer.

Alternatively, although the embodiments of the disclosure will be described in detail, referring to the Bluetooth standards, the subject matter of the disclosure is applicable to other communication systems having a similar technical background with slight modifications made without greatly departing from the scope of the disclosure as judged by those skilled in the art.

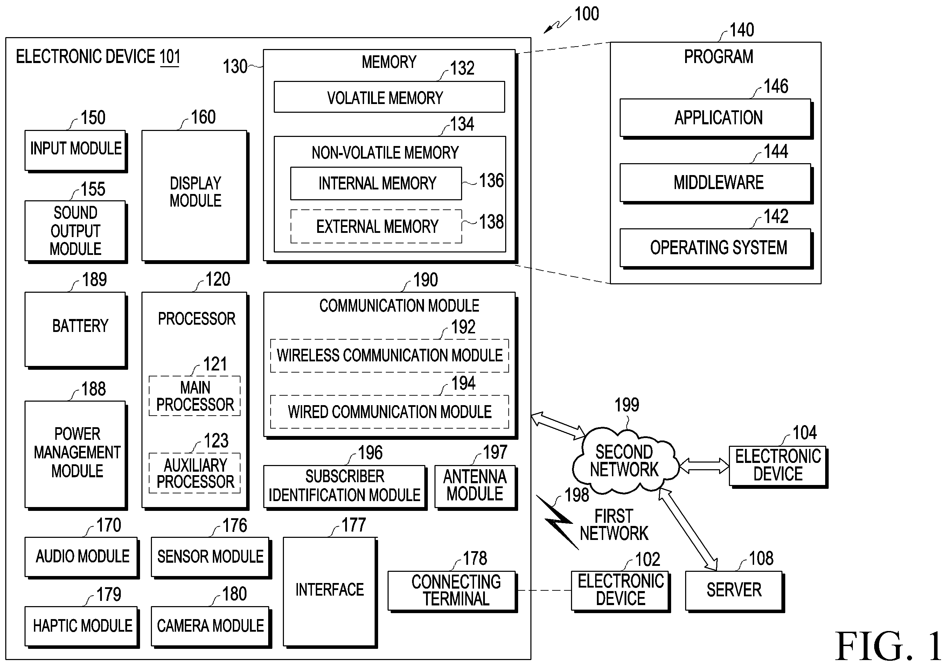

FIG. 1 is a block diagram illustrating an electronic device 101 in a network environment 100 according to various embodiments.

Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-nearby communication scheme (e.g., a bus, general purpose input and output (GPIO), serial nearby interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

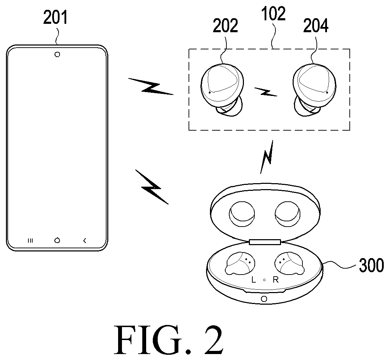

FIG. 2 is a diagram illustrating Bluetooth-based connections in a wireless communication network according to an embodiment.

Referring to FIG. 2, an electronic device 201 (e.g., the electronic device 101 of FIG. 1) may be wirelessly connected to an ear-wearable device (e.g., the electronic device 102 of FIG. 1). In an embodiment, the electronic device 201 may be a smartphone. The ear-wearable device 102 may include a pair of a first electronic device 202 (e.g., a left earbud) and a second electronic device 204 (e.g., a right earbud).

The electronic device 201 may establish a connection (e.g., a communication link) with at least one of the first electronic device 202 or the second electronic device 204, and transmit and/or receive data to and/or from the at least one electronic device. According to an embodiment, each of the electronic device 101, the first electronic device 202, and the second electronic device 204 may establish a communication link based on at least one of wireless fidelity (Wi-Fi) and/or Bluetooth. In embodiments of the disclosure, a method of establishing a communication link in each of the electronic device 101, the first electronic device 202, and the second electronic device 204 is not limited to the at least one of Wi-Fi and/or Bluetooth. In an embodiment, the electronic device 201 may establish a communication link with only one of the first electronic device 202 and the second electronic device 204 or with each of the first electronic device 202 and the second electronic device 204.

In an embodiment, the first electronic device 202 and the second electronic device 204 may establish a communication link with each other based on at least one of Wi-Fi and/or Bluetooth. In embodiments of the disclosure, a method of establishing a communication link in the first electronic device 202 and the second electronic device 204 is not limited to the at least one of Wi-Fi and/or Bluetooth.

One of the first electronic device 202 and the second electronic device 204 may operate as a central device (or a primary device or a main device), and the other may operate as a peripheral device (or a secondary device or a sub device). The central device may transmit data to the peripheral device. For example, the electronic device 201 may act as a central device, and the first electronic device 202 and/or the second electronic device 204 may act as a peripheral device. For example, when the first electronic device 202 and the second electronic device 204 establish a communication link with each other, one of the first electronic device 202 and the second electronic device 204 may be selected as a central device, and the other may be selected as a peripheral device.

The first electronic device 202 and the second electronic device 204 may communicate directly or indirectly with a third electronic device 300. In an embodiment, the electronic device 201 may communicate directly or indirectly with the third electronic device 300. In an embodiment, the third electronic device 300 may be an earbuds case device or a cradle device to keep and charge the first electronic device 202 and the second electronic device 204.

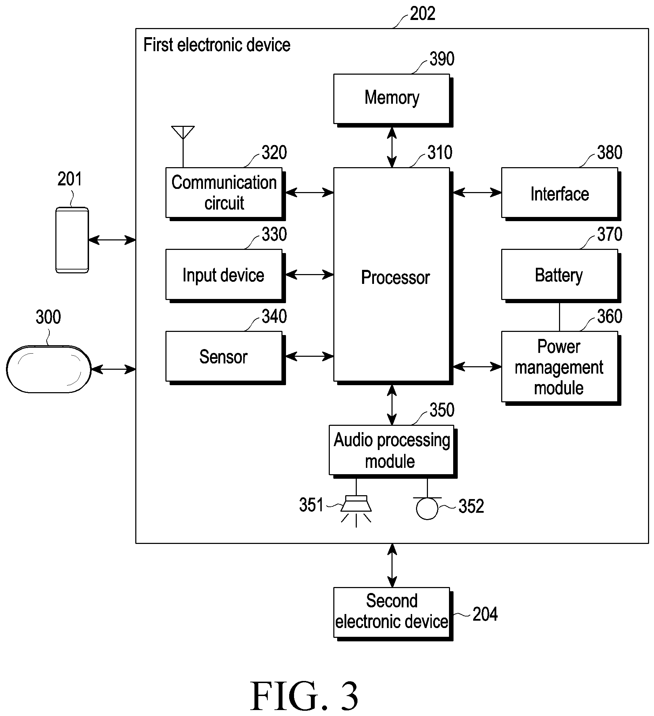

FIG. 3 is a block diagram illustrating the configuration of a first electronic device in a wireless communication network according to an embodiment.

Referring to FIG. 3, the electronic device 201 (e.g., the electronic device 101 of FIG. 1) may be wirelessly connected to an ear-wearable device (e.g., the electronic device 102 of FIG. 1). In an embodiment, the electronic device 201 may be a smartphone, and the ear-wearable device may include the first electronic device 202 (e.g., the left earbud) and the second electronic device 204 (e.g., the light earbud).

While the first electronic device 202 and the second electronic device 204 implemented as earbuds are described in FIG. 3, the first electronic device 202 and the second electronic device 204 may be implemented as various types of devices (e.g., a smart watch, a head-mounted display device, and biosignal measuring devices (e.g., an electrocardiogram patches) supporting Bluetooth communication. According to an embodiment, when the first electronic device 202 and the second electronic device 204 are implemented as earbuds, the first electronic device 202 and the second electronic device 204 may form one pair.

In an embodiment, the first electronic device 202 may include a component identical or similar to at least one of the components (e.g., modules) of the electronic device 201 (e.g., the electronic device 101 of FIG. 1). The first electronic device 202 may include a communication circuit 320 (e.g., the communication module 190 of FIG. 1), an input device 330 (e.g., the input module 150 of FIG. 1), a sensor 340 (e.g., the sensor module 176 of FIG. 1), an audio processing module 350 (e.g., the audio module 170 of FIG. 1), memory 390 (e.g., the memory 130 of FIG. 1), a power management module 360 (e.g., the power management module 188 of FIG. 1), a battery 370 (e.g., the battery 189 of FIG. 1), an interface 380 (e.g., the interface 177 of FIG. 1), and a processor 310 (e.g., the processor 120 of FIG. 1).

According to an embodiment, the communication circuit 320 may include at least one of a wireless communication module (e.g., a Bluetooth communication module, a cellular communication module, a Wi-Fi communication module, a near field communication (NFC) communication module, a global navigation satellite system (GNSS) module, or a wired communication module (e.g., a local area network (LAN) communication module, and/or a PLC communication module).

The communication circuit 320 may communicate directly or indirectly with at least one of the electronic device 201, the third electronic device, or the second electronic device 204 through a first network (e.g., the first network 198 of FIG. 1), using at least one included communication module. In an embodiment, the communication circuit 320 may operate independently of the processor 310, and include one or more communication processors supporting wired or wireless communication.

The communication circuit 320 may be connected to one or more antennas through which a signal or information may be transmitted to or received from another electronic device (e.g., the electronic device 201, the second electronic device 204, or the third electronic device 300). According to an embodiment, at least one antenna suitable for a communication scheme used in a communication network such as a first network (e.g., the first network 198 of FIG. 1) or a second network (e.g., the second network 199 of FIG. 2) may be selected from among a plurality of antennas by the communication circuit 320. A signal or information may be transmitted or received between the communication circuit 320 and another electronic device through the at least one selected antenna.

The input device 330 may be configured to generate various input signals that may be used to operate the first electronic device 202. The input device 330 may include at least one of a touch pad, a touch panel, or a button.

According to an embodiment, the input device 330 may generate a user input related to on or off of the first electronic device 202. According to an embodiment, the input device 330 may receive a user input for establishing a communication link between the first electronic device 202 and the second electronic device 204. According to an embodiment, the input device 330 may receive a user input related to audio data (or audio content). For example, the user input may be related to the function of play start, play pause, play stop, play speed control, play volume control, or mute for the audio data.

The sensor 340 may obtain a position or operation state of the first electronic device 202. The sensor 340 may convert an obtained signal into an electrical signal. For example, the sensor 340 may include at least one of a magnetic sensor, an acceleration sensor, a gyro sensor, a geomagnetic sensor, a proximity sensor, a gesture sensor, a grip sensor, a biometric sensor, and/or an optical sensor.

The processor 310 may obtain data (e.g., audio data) from a data packet received from the electronic device 201, process the obtained data through the audio processing module 350, and output the processed data to a speaker 351. The audio processing module 350 may support a function of collecting audio data and reproduce the collected audio data.

According to an embodiment, the audio processing module 350 may include an audio decoder (not shown) and a digital to analog (D/A) converter (not shown). The audio decoder may convert audio data stored in the memory 390 or received from the electronic device 201 through the communication circuit 320 into a digital audio signal. The D/A converter may convert the digital audio signal converted by the audio decoder into an analog audio signal. According to an embodiment, the audio decoder may convert audio data received from the electronic device 201 through the communication circuit 320 and stored in the memory 390 into a digital audio signal. The speaker 354 may output the analog audio signal converted by the D/A converter.

According to an embodiment, the audio processing module 350 may include an analog to digital (A/D) converter (not shown). The A/D converter may convert an analog audio signal received through the microphone 352 into a digital audio signal. A microphone 352 may include at least one air conduction microphone and/or at least one bone conduction microphone, to obtain voice and/or sound.

According to an embodiment, the audio processing module 350 may reproduce various set audio data in an operation of the first electronic device 202. For example, the processor 310 may be designed to identify through the sensor 340 that the first electronic device 202 is coupled with or separated from the user's ear through the sensor 340, and receive audio data of an effect sound or a guide sound through the audio processing module 350. Outputting the effect sound or the guide sound may be skipped according to a user setting or a designer's intention.

The memory 390 may store various data used by at least one component (e.g., the processor 310 or the sensor 340) of the first electronic device 302. For example, the data may include input data or output data for software and related instructions. The memory 390 may include volatile memory or non-volatile memory.

The power management module 360 may manage power supplied to the first electronic device 302. According to an embodiment, the power management module 360 may be implemented as at least part of a PMIC. According to an embodiment, the power management module 360 may include a battery charging module. According to an embodiment, when another electronic device (e.g., one of the electronic device 201, the second electronic device 204, and/or the third electronic device 300) is electrically (wirelessly or wiredly) connected to the first electronic device 202, the power management module 360 may receive power from the other electronic device through the connection and charge the battery 370.

The battery 370 may supply power to at least one component of the first electronic device 202. According to an embodiment, the battery 370 may include a rechargeable battery. According to an embodiment, when the first electronic device 202 is mounted in the third electronic device 300, the first electronic device 202 may charge the battery 370 to a specified charge level, and then turn on the first electronic device 202 or at least part of the communication circuit 320.

The interface 380 may support one or more specified protocols available to directly (e.g., wiredly) connect to the electronic device 201, the third electronic device 300, the second electronic device 204, or another electronic device. According to an embodiment, the interface 380 may include at least one of a HDMI, a USB interface, an SD card interface, a PLC interface, or an audio interface. According to an embodiment, the interface 380 may include at least one connection port for forming a physical connection to the third electronic device 300.

The processor 310 may execute software to control at least one other component (e.g., a hardware or software component) of the first electronic device 202 connected to the processor 310 and perform various data processes or operations. According to an embodiment, as at least part of a data process or operation, the processor 310 may load an instruction or data received from another component (e.g., the sensor 340 or the communication circuit 320) on the volatile memory 390, process the instruction or data stored in the volatile memory 390, and store the resulting data in non-volatile memory.

The processor 310 may establish a communication link with the electronic device 201 through the communication circuit 320 and receive data (e.g., audio data) from the electronic device 201 through the established communication link. In an embodiment, the processor 310 may transmit data received from the electronic device 201 to the second electronic device 204 through the communication circuit 320. According to an embodiment, the processor 310 may perform operations of the first electronic device 202 to be described below.

According to an embodiment, the first electronic device 202 may further include one or more modules according to its provision type. The first electronic device 202 may further include components equivalent to the above-described components, although all of them may not be enumerated due to the wide variety of variations according to the convergence trend of digital devices. Further, according to an embodiment, specific ones of the components described with reference to FIG. 3 may be excluded or replaced with other components in the first electronic device 202 according to the provision type of the first electronic device 202.

According to an embodiment, the second electronic device 204 configured as paired with the first electronic device 202 may include the same components as or similar components to ones included in the first electronic device 202, and perform all or some of operations of the second electronic device 204 described below.

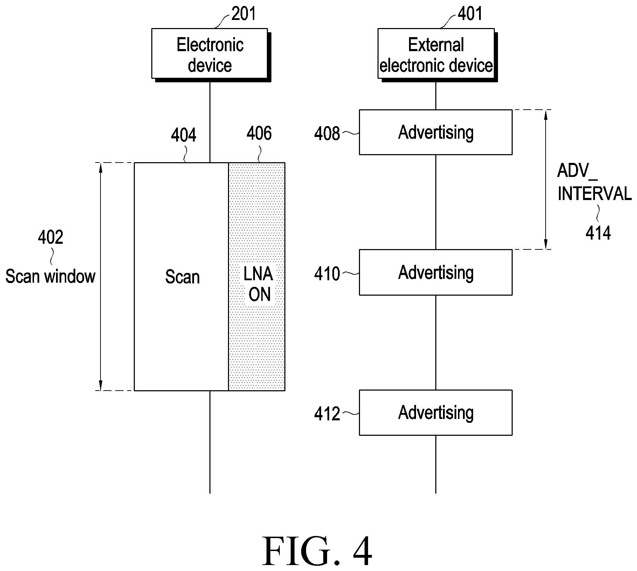

FIG. 4 is a diagram illustrating a scan procedure for a BLE service according to an embodiment.

Referring to FIG. 4, the electronic device 201 (e.g., the electronic device 101 of FIG. 1) and an external electronic device 401 (e.g., the first electronic device 202 or the second electronic device 204) may perform BLE communication in the background all the time in order to provide a beacon service. The electronic device 201 (e.g., a smartphone) may operate in a BLE scan mode as a central device, and the external electronic device 401 (e.g., a tag, a left earbud, or a right earbud) may operate in a BLE advertising mode as a peripheral device.

In an embodiment, the electronic device 201 may perform a BLE scan 404 during a scan window 402. The scan window 402 may have a specified length and be repeated at every scan interval of a specified value. The electronic device 201 may monitor whether an advertising packet has been received from a Bluetooth device (e.g., the external electronic device 401) which may be located in the vicinity by performing the BLE scan 404. The external electronic device 401 may periodically transmit Bluetooth signals including advertising packets 408, 410, and 412 according to a given advertisement interval (ADV_INTERVAL) 414.

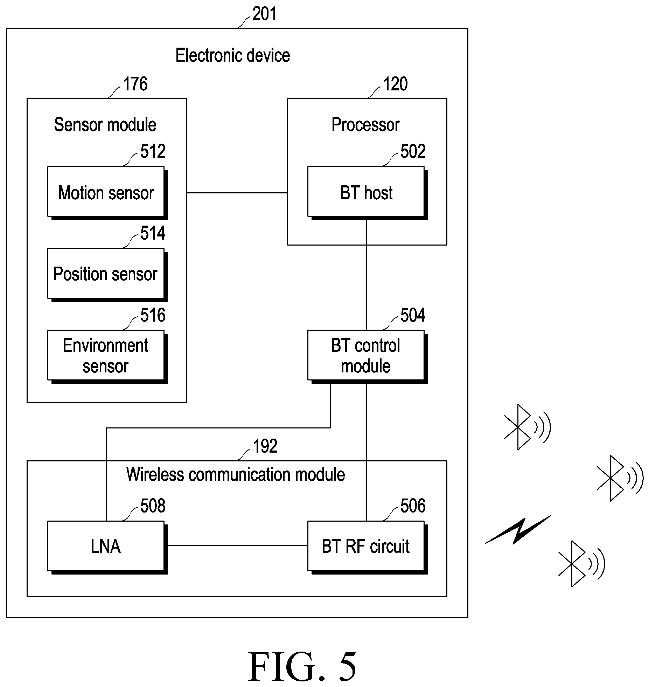

When detecting that Bluetooth signals received from Bluetooth devices (e.g., the external electronic device 401) which may be located in the vicinity have a CRC error or a low RSSI during the BLE scan 404, the electronic device 201 may operate an LNA (e.g., an LNA 508 of FIG. 5) included in the electronic device 201 (406) and input the Bluetooth signals received from the Bluetooth devices to a Bluetooth chipset inside the electronic device 201 through the LNA. For example, the electronic device 201 may receive a Bluetooth signal through the BLE scan 404 and perform a CRC check on a packet detected from the Bluetooth signal to determine whether a CRC error exists. For example, the electronic device 201 may measure the RSSI of the Bluetooth signal received through the BLE scan 404 and determine whether the measured RSSI value is less than a preset threshold. The LNA may be enabled (e.g., turned on or activated) or disabled (e.g., turned off or deactivated) according to determination of the electronic device 201. The LNA may be enabled and consume power during the BLE scan 404 of the electronic device 201.

For example, the LNA may be turned off while a direct current (DC) voltage for driving the LNA is not applied to the LNA, and turn-off of the LNA may be referred to as disabling or deactivation of the LNA. For example, while the DC voltage for driving the LNA is applied to the LNA, the LNA may be turned on to perform low-noise amplification, and turn-on of the LNA may be referred to as enabling or activation of the LNA.

When a plurality of Bluetooth devices exist around the electronic device 201, the electronic device 201 may detect a CRC error and/or a low RSSI from time to time. In this case, the electronic device 201 may constantly operate the LNA, thereby consuming much power. For example, power consumption of 10mA may occur due to enabling of the LNA. In an embodiment, the electronic device 201 may support BLE scan modes such as low latency, balanced, and low power. When the electronic device 201 operates in the low latency scan mode for a latency-sensitive service, the operation of the LNA may add current consumption (e.g. 10mA) to power consumption of the Bluetooth chipset.

In the low latency scan mode, for example, the Bluetooth chipset may consume a current of 20mA, and when the LNA operates in a scan window (e.g., the scan window 402), the LNA may consume an additional current of 10mA. Accordingly, the Bluetooth scan operation in the electronic device 201 may consume a current of 30mA in total. Therefore, the electronic device 201 may have a shorter use time due to the Bluetooth scan involving the LNA operation than when the LNA is not used.

Embodiments of the disclosure may efficiently control an LNA operation during a Bluetooth scan operation, and reduce power consumption due to a Bluetooth operation, and provide RF performance and BLE scan latency equivalent to BLE full scan by efficiently controlling an RF circuit (e.g., the LNA) for the Bluetooth operation based on an ambient environment (e.g., sensor data) as well as a Bluetooth signal itself.

FIG. 5 is a block diagram illustrating the electronic device 201 that performs Bluetooth operation control according to an embodiment.

Referring to FIG. 5, the electronic device 201 (e.g., the electronic device 101 of FIG. 1) may include the processor 120, a Bluetooth (BT) control module 504, the sensor module 176, and the wireless communication module 192. The sensor module 176 may include, for example, at least one motion sensor 512, at least one position sensor 514, or at least one environment sensor 516. In an embodiment, the sensor module 176 may be implemented as a sensor hub chip (not shown) distinct from the processor 120. The sensor hub chip may subject sensor data collected by at least one sensor to a basic process and then transmit the processed sensor data to the processor 120 and/or the BT control module 504.

In an embodiment, the motion sensor 512 may include an accelerometer, a gravity sensor, a linear accelerometer, a rotation vector sensor, a gyroscope, a step counter sensor, and/or a step detector sensor. In an embodiment, the position sensor 514 may include a global positioning system (GPS) module, a rotation vector sensor, a geomagnetic sensor, a magnetic sensor, and/or a proximity sensor. In an embodiment, the environment sensor 516 may include a temperature sensor and/or a pressure sensor. The processor 120 may detect movement and/or a change in position of the electronic device 201 based on sensor data provided from the sensor module 176.

The processor 120 may include a BT host 502 and communicate with the BT control module 504. The BT host 502 may trigger and control a Bluetooth operation (e.g., a logical link control and adaptation protocol (L2CAP) layer) according to the Bluetooth communication standards, for example, a BLE scan operation and/or a BLE advertising operation. In an embodiment, the BT host 502 may be implemented in software or firmware executed by the processor 120. In an embodiment, the BT host 502 may include a function (or component) of controlling an operation of a BT RF circuit 506 based on sensor data obtained from the sensor module 176.

The BT control module 504 may control the BT RF circuit 506 to perform the BLE scan operation and/or the BLE advertising operation under the control of the processor 120 (e.g., the BT host 502). To this end, the BT control module 504 may be implemented by including at least one processor. In an embodiment, the BT control module 504 may include a host-controller interface (HCI), a link layer, and a physical layer, to generate and process a signal conforming to the Bluetooth communication standards. In an embodiment, the BT control module 504 may be implemented in software or firmware executed by the processor 120. In an embodiment, the BT control module 504 may be implemented as an individual chipset including a function (or component) of controlling an operation of the BT RF circuit 506 based on sensor data obtained from the sensor module 176 directly or through the processor 120.

The operation of the BT RF circuit 506 will be described as controlled by the processor 120 (e.g., the BT host 502) in the embodiments of the disclosure, which should not be construed as limiting. It may be possible to control the operation of the BT RF circuit 506 by the BT control module 504.

The processor 120 (e.g., the BT host 502) may determine whether the electronic device 201 needs to operate in a low power mode based on sensor data provided from the sensor module 176, for example, an acceleration and/or a position. In an embodiment, when determining based on sensor data that the position of the electronic device 201 has changed or that an environment factor (e.g., temperature or pressure) has changed, the processor 120 (e.g., the BT host 502) determines to perform an adaptive scan operation in a high performance mode in order to operate with an increased scan sensitivity for peripheral Bluetooth devices. On the contrary, when a valid change in the position and/or environment of the electronic device 201 is not detected, the processor 120 (e.g., the BT host 502) determines to perform an adaptive scan operation in the low power mode to increase battery efficiency. In some embodiments, the adaptive scan operation may refer to an operation mode in which the BT RF circuit 506 and/or an LNA 508 are controlled according to sensor data.

The wireless communication module 192 may include the BT RF circuit 506 conforming to the Bluetooth communication standards, and the LNA 508 operating outside the BT RF circuit 506. In an embodiment, the LNA 508 may be used to improve the performance of Bluetooth communication, and shared with other wireless communication (e.g., Wi-Fi). The LNA 508 may be enabled (or turned on or enabled) or disabled (or turned off or disabled) under the control of processor 120 (e.g., the BT host 502).

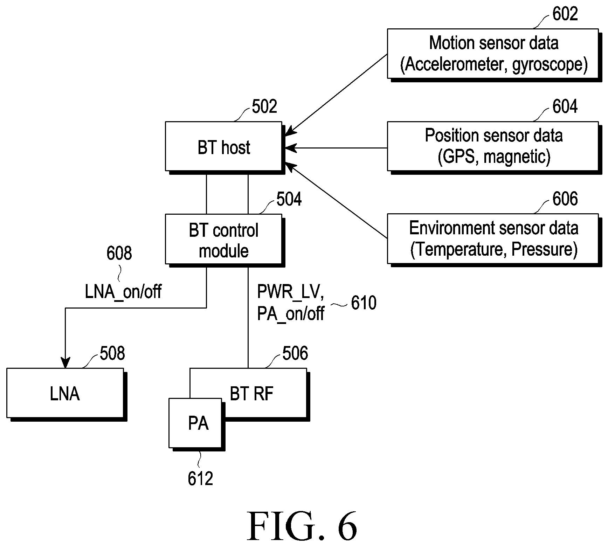

The BT RF circuit 506 may include RF components supporting a communication operation according to the Bluetooth communication standards, for example, at least one filter, a mixer, and a power amplifier (PA) (e.g., a PA 612 of FIG. 6) in a transmission path, and at least one filter, at least one amplifier, and a mixer in a reception that. The PA may be enabled (or turned on or enabled) or disabled (or turned off or disabled) under the control of the processor 120 (e.g., the BT host 502). The BT RF circuit 506 may generate and transmit a Bluetooth signal (e.g., an advertising packet) having a transmission power set under the control of the processor 120 (e.g., the BT host 502).

The processor 120 (e.g., the BT host 502) may determine at least one of enable/disable of the LNA 508, enable/disable of the PA 612 in the BT RF circuit 506, or a transmission power level for the BT RF circuit 506, depending on whether the processor 120 (e.g., the BT host 502) has determined a normal mode (e.g., the high-performance mode) or the low-power mode, generate a control command according to the determination, and transmit the control command to the LNA 508 and/or the BT RF circuit 506 through the BT control module 504.

In an embodiment, the normal mode may include at least one of enable of the LNA 508, enable of the PA 612, or a transmission power level of a specified high value (e.g., a first value). In an embodiment, the low power mode may include at least one of disable of the LNA 508, disable of the PA 612, or a transmission power level of a specified low value (e.g., a second value less than the first value). In an embodiment, the control command may indicate enable/disable (or on/off) for the LNA 508. In an embodiment, the control command may instruct PA enable/disable (or PA on/off) for the BT RF circuit 506. In an embodiment, the control command may indicate a transmission power level (e.g., high/medium/low) for the BT RF circuit 506.

FIG. 6 is a diagram illustrating Bluetooth operation control in the electronic device 201 according to an embodiment.

Referring to FIG. 6, the processor 120 (e.g., the BT host 502) may determine to start a BLE scan. In an embodiment, the processor 120 (e.g., the BT host 502) may determine to start the BLE scan at the starting time of a scan window based on a scan interval according to a preset scan mode (e.g., low latency, balanced, or low power). In an embodiment, the processor 120 (e.g., the BT host 502) may instruct the BT control module 504 to start the BLE scan.

Before instructing the BT control module 504 to perform the scan operation according to the preset scan mode or while performing the scan operation, the processor 120 (e.g., the BT host 502) may receive at least one sensor data from the sensor module 176. In an embodiment, the at least one sensor data may include at least one of motion sensor data 602, position sensor data 604, or environment sensor data 606.

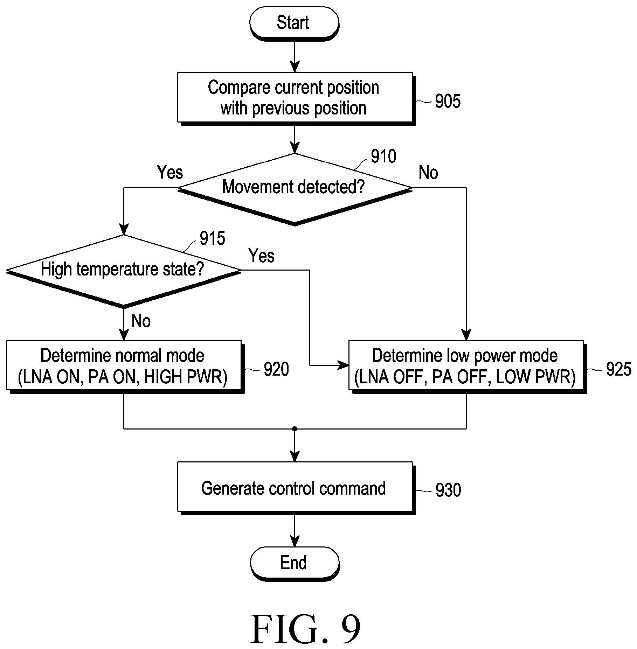

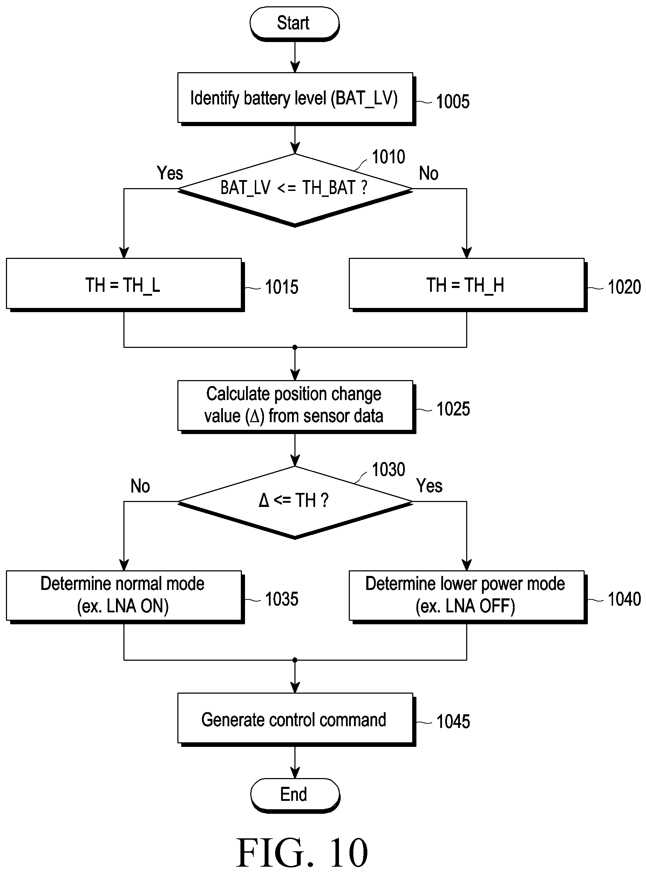

In an embodiment, the processor 120 (e.g., the BT host 502) may determine whether to operate in the low power mode based on the sensor data 602, 604, or 606. In an embodiment, the processor 120 (e.g., the BT host 502) may calculate a change value indicating a change in the position and/or environment of the electronic device 201 based on the sensor data 602, 604, or 606, and when the change value is greater than a specified threshold, determine to operate the electronic device 201 in the normal mode. On the contrary, when the change value is less than or equal to the threshold, the processor 120 (e.g., the BT control module 504) may determine to operate the electronic device 201 in the low power mode. Embodiments of calculating the change value may be described later with reference to FIGS. 9 and 10.

In an embodiment, the processor 120 (e.g., the BT host 502) may generate a control command according to the determination. In an embodiment, the control command may include a first control command 610 (e.g., PWR_LV, and/or PA_on/off) for the BT RF circuit 506. The first control command 610 may indicate a relatively high power level of PWR_LV and/or enable (or turn-on) of the PA 612 for the normal mode, and a relatively low power level of PWR_LV and/or disable (or turn-off) of the PA 612 for the low power mode. For example, the power level of PWR_LV for the normal mode and/or the low power mode may be a predetermined value or a value within a specified range. In an embodiment, the control command may include a second control command 608 (e.g., LNA_on/off) for the LNA 508. The second control command 608 may instruct enable (or turn-on) of the LNA 508 in the normal mode, and disable (or turn-off) of the LNA 508 in the low-power mode.

In an embodiment, the control command may include a third control command (not shown) indicating any one of the BLE scan modes, for example, low latency, balanced, or low power. In an embodiment, the control command may include parameter values for a BLE scan operation, for example, a value of a scan window or scan interval.

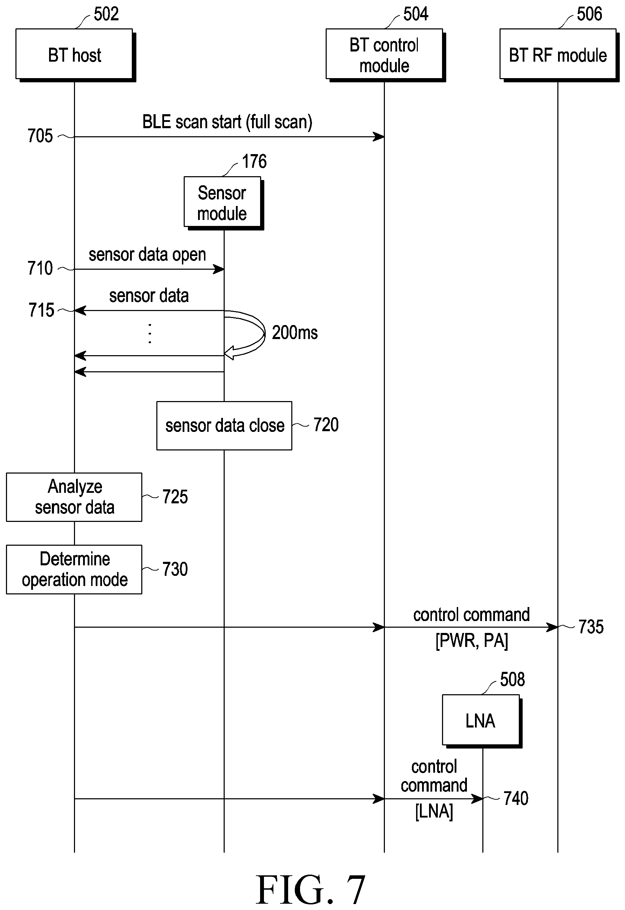

FIG. 7 is a diagram illustrating a signal flow for Bluetooth operation control according to an embodiment.

According to an embodiment, an electronic device (e.g., the electronic device 201) may include the processor 120 including the BT host 502, the BT control module 504, the sensor module 176, the BT RF circuit 506, and the LNA 508.

Referring to FIG. 7, the BT host 502 may transmit a command instructing to start a BLE scan (hereinafter referred to as a BLE scan start command) to the BT control module 504 in operation 705. In operation 710, the BT host 502 may transmit a sensor data open command to the sensor module 176. In an embodiment, the BT host 502 may transmit the sensor data open command to the sensor module 176 based on socket communication. The sensor module 176 may open socket communication for sensor data in response to the sensor data open command. The sensor module 176 may start transmitting (or broadcasting) sensor data according to a specified interval and/or condition.

In an embodiment, when determining to start the BLE scan, the BT host 502 may transmit the sensor data open command to the sensor module 176. In an embodiment, the BT host 502 may transmit the sensor data open command to the sensor module 176 a given time before the starting time of the BLE scan. The BT host 502 may calculate the starting time of the BLE scan according to a scan interval and a scan window based on a current scan mode which has been set, and open the socket communication of the sensor module 176 by the sensor data open command so that the sensor data may be obtained at the starting time or at a specific time earlier than the starting time.

In operation 715, the BT host 502 may capture (or obtain) sensor data from the sensor module 176 according to a specified periodicity (or a periodicity indicated by the sensor data open command) (e.g., 50ms to 400ms). In an embodiment, when the BLE scan start command is received, the BT host 502 may start capturing (or obtaining) the sensor data from the sensor module 176. In an embodiment, the BT host 502 may start capturing (or obtaining) the sensor data from the sensor module 176 a given time before the starting time of the BLE scan based on the BLE scan start command. In an embodiment, the BT host 502 may register as a listener to the sensor module 176 through the command of operation 710, and capture (or obtain) sensor data transmitted (or broadcast) from the sensor module 176 according to the registration.

In operation 720, the BT host 502 may periodically capture (or obtain) sensor data for a given time (e.g., 300ms to 1000ms) and then stop capturing (or obtaining) the sensor data. In an embodiment, the given time may be predetermined or determined by the BT host 502. In an embodiment, the BT host 502 may continue to capture (or obtain) sensor data from the sensor module 176 until the BT host 502 transmits a command to stop the sensor data to the sensor module 176. In an embodiment, the sensor module 176 may periodically transmit sensor data to the BT host 502 for the given time (e.g., 300ms to 1000ms) or until receiving the command to stop the sensor data from the BT host 502.

In operation 725, the BT host 502 may analyze the sensor data provided from the sensor module 176. In an embodiment, the sensor data transmitted in operation 715 may include at least one of the motion sensor data 602, the position sensor data 604, or the environment sensor data 606, and the BT host 502 may determine based on the sensor data whether the electronic device 201 has moved and/or whether the electronic device 201 needs to operate in the low power mode.

According to an embodiment, the BT host 502 may collect and store sensor data in advance, and analyze the sensor data at a time when it determines to start the BLE scan. In an embodiment, the BT host 502 may start to receive the sensor data at the time when it determines to start the BLE scan, and analyze the sensor data at intervals of a given periodicity (e.g., the periodicity may be longer than a sensor data reception periodicity). According to an embodiment, the BT host 502 may analyze the sensor data at a time (e.g., operation 720) when the sensor data is completely provided by the sensor module 176.

In operation 730, the BT host 502 may determine an adaptive scan mode of the electronic device 201 based on the analysis of the sensor data. In an embodiment, the adaptive scan mode may be related to power consumption of a Bluetooth operation (e.g., a scan operation or an advertising operation) of the electronic device 201 and used to control the BT RF circuit 506 and/or the LNA 508. In an embodiment, the adaptive scan mode may include at least one of the normal mode (e.g., the high performance mode) or the low power mode. In an embodiment, the BT host 502 may determine whether to perform the low power mode by comparing a specified threshold with a change value related to the position and/or environment of the electronic device 201, calculated based on the sensor data.

In an embodiment, the BT host 502 may determine whether to operate in the low power mode based on the analysis of the sensor data. When the low power mode is not determined, the BT host 502 may maintain a current operation of the BT RF circuit 506 and/or the LNA 508. In an embodiment, the BT host 502 may determine either the low power mode or the normal mode based on the analysis of the sensor data. In some embodiments of the disclosure, the normal mode (or the high performance mode) and/or the low power mode will be described. However, the adaptive scan modes are not limited to the normal mode and the low power mode, and other adaptive scan modes may further be used. Embodiments of calculating a change value based on sensor data may be described below with reference to FIGS. 9 and 10.

In operation 735, when determining that it is necessary to control the BT RF circuit 506 as a result of operation 730, the BT host 502 may transmit a first control command for the BT RF circuit 506 to the BT RF circuit 506 through the BT control module 504. In an embodiment, the first control command may include a value (e.g., PWR_HIGH/MEDIUM/LOW) of a transmission power level for the BT RF circuit 506 and/or a value (e.g., PA_on/off) indicating enable/disable of the PA 612 included in the BT RF circuit 506. In an embodiment, the BT RF circuit 506 may disable or enable the PA 612 according to the first control command. In an embodiment, when movement of the electronic device 201 is not detected based on the sensor data or when the low power mode is determined, the PA 612 may be disabled.

In an embodiment, the BT RF circuit 506 may transmit a Bluetooth signal including an advertising packet with the transmission power level according to the first control command. In an embodiment, the first control command may be valid until a next BLE scan starts. In an embodiment, the first control command may be valid until a next control command is received.

In operation 740, when determining that it is necessary to control the LNA 508 as a result of operation 730, the BT host 502 may transmit a second control command for the LNA 508 to the LNA 508. In an embodiment, the second control command may include a value (e.g., LNA_on/off) indicating enable/disable of the LNA 508. In an embodiment, the LNA 508 may be disabled or enabled according to the second control command. In an embodiment, when movement of the electronic device 201 is not detected based on the sensor data or when the low power mode is determined, the LNA 508 may be disabled. In an embodiment, the second control command may be valid during a current scan window until a next BLE scan starts. In an embodiment, the second control command may be valid until before a next control command is received, for example, during the current scan window and at least one subsequent scan window.

Although not shown, in an embodiment, the BT control module 504 may receive sensor data from the sensor module 176, directly or through the processor 120 (e.g., the BT host 502), and perform at least one of operation 725 or operation 730. In an embodiment, the BT control module 504 may be registered as a listener to the sensor module 176 by the processor 120 (e.g., the BT host 502), or may register as a listener directly to the sensor module 176. In an embodiment, the control command of operation 735 or operation 740 may be generated by the BT control module 504.

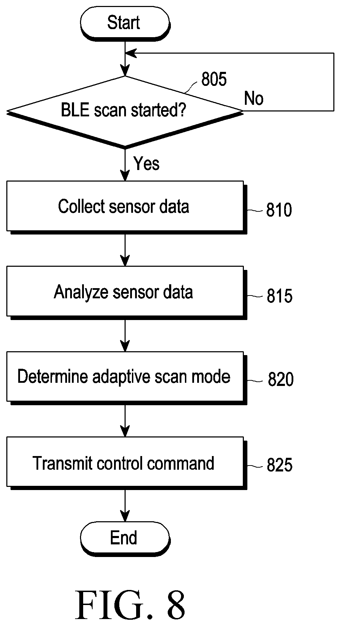

FIG. 8 is a flowchart illustrating an operation of the electronic device 201 according to an embodiment. At least one of the illustrated operations may be performed by the processor 120 (e.g., the BT host 502) of the electronic device 201. In an embodiment, the processor 120 may perform the following operations at the start of every scan window or with a periodicity of at least one scan window. In another embodiment, at least one of the illustrated operations may be performed by the BT control module 504.

Referring to FIG. 8, the processor 120 (e.g., the BT host 502) may determine whether to start a BLE scan in operation 805. In an embodiment, the processor 120 (e.g., the BT host 502) may determine whether to start the BLE scan at a current time according to a scan window and a scan interval corresponding to a current scan mode (e.g., low latency, balanced, or low power) which has been set. Upon determining to start the BLE scan, the processor 120 (e.g., the BT host 502) may proceed to operation 810.

In operation 810, the processor 120 (e.g., the BT host 502) may start collecting (e.g., capturing) sensor data. In an embodiment, the processor 120 (e.g., the BT host 502) may start capturing (or obtaining) sensor data at the starting time of the BLE scan determined in operation 805 or at a time earlier than the starting time of the BLE scan. In an embodiment, the processor 120 (e.g., the BT host 502) may periodically capture (or obtain) sensor data and analyze the captured (or obtained) sensor data regardless of whether a BLE scan is performed. In an embodiment, the sensor data may include at least one of the motion sensor data 602, the position sensor data 604, or the environment sensor data 606.

In operation 815, the processor 120 (e.g., the BT host 502) may analyze the collected sensor data. In an embodiment, the processor 120 (e.g., the BT host 502) may determine a position change and/or an environment change of the electronic device 201 based on the sensor data. In an embodiment, the processor 120 (e.g., the BT host 502) may calculate a change value indicating the position change and/or environment change of the electronic device 201 based on at least one of the motion sensor data 602, the position sensor data 604, or the environment sensor data 606 included in the sensor data. Exemplary embodiments of calculating a change value will be described with reference to FIGS. 9 and 10.

In operation 820, the processor 120 (e.g., the BT host 502) may determine an adaptive scan mode for a Bluetooth operation of the electronic device 201, using a result (e.g., the change value) of analyzing the sensor data. In an embodiment, the adaptive scan mode may be related to control of the BT RF circuit 506 and/or the LNA 508 and include at least one of the normal mode or the low power mode. In an embodiment, the adaptive scan mode may include at least one of disable (or deactivation) of the LNA 508, disable (or deactivation) of the PA 612, or a transmission power level (e.g., high/medium/low).

In operation 825, the processor 120 (e.g., the BT host 502) may transmit a control command based on the determined adaptive scan mode to a corresponding component, for example, the LNA 508 and/or the BT RF circuit 506. In an embodiment, the control command may instruct enable/disable (or on/off) of the LNA 508. In an embodiment, the control command may instruct PA enable/disable (or PA on/off) of the BT RF circuit 506. In an embodiment, the control command may indicate a transmission power level (e.g., high/medium/low) for the BT RF circuit 506.

In an embodiment, although the processor 120 (e.g., BT host 502) transmits a control command (e.g., LNA disable LNA or PA disable) to the LNA 508 and/or the BT RF circuit 506 to reduce power consumption, the processor 120 may not transmit a control command (e.g., LNA enable or PA enable) that is not related to reduction of power consumption.

FIG. 9 is a flowchart illustrating Bluetooth operation control in the electronic device 201 according to an embodiment. At least one of the illustrated operations may be performed by the processor 120 (e.g., the BT host 502) of the electronic device 201. In an embodiment, the illustrated operations may correspond to operations 810 to 820 of FIG. 8. In another embodiment, at least one of the illustrated operations may be performed by the BT control module 504.

Referring to FIG. 9, the processor 120 (e.g., the BT host 502) may identify a current position based on sensor data (e.g., sensor data collected in operation 810) (e.g., at least one of the motion sensor data 602, the position sensor data 604, or the environment sensor data 606) and compare the current position with a previous position in operation 905,. In an embodiment, the processor 120 (e.g., the BT host 502) may periodically determine the position of the electronic device 201 based on the motion sensor data 602 and/or the position sensor data 604, and determine whether the electronic device 201 has moved by comparing the position determined in a current period with a position determined in a previous period.

In operation 910, the processor 120 (e.g., the BT host 502) may determine whether the electronic device 201 has moved according to a comparison result. In an embodiment, when a difference (e.g., distance) between the position determined in the current period and the previous position is greater than a given threshold (e.g., 1m to 10m), the processor 120 (e.g., the BT host 502) may determine that movement of the electronic device 201 has been detected. Upon detection of the movement of the electronic device 201, the processor 120 (e.g., the BT host 502) may proceed to operation 915. In an embodiment, upon detection of the movement of the electronic device 201, the processor 120 (e.g., the BT host 502) may skip operation 915 and proceed to operation 920. When the movement of the electronic device 201 is not detected, the processor 120 (e.g., the BT host 502) may proceed to operation 925.

In operation 915, the processor 120 (e.g., the BT host 502) may determine whether the electronic device 201 is in a high temperature state in which the temperature of the electronic device 201 is higher than a given threshold, based on sensor data of a temperature sensor (e.g., a surface temperature or internal temperature of the electronic device 201) among the sensor data. When the electronic device 201 is in the high temperature state, the processor 120 (e.g., the BT host 502) may proceed to operation 925. On the contrary, when the electronic device 201 is not in the high temperature state, that is, when the temperature of the electronic device 201 is not higher than the threshold, the processor 120 (e.g.,

the BT host 502) may proceed to operation 920.

In an embodiment, when the movement of the electronic device 201 is not detected in operation 910, operation 915 may be performed. For example, when the processor 120 (e.g., the BT host 502) fails in detecting the movement of the electronic device 201 in operation 910 and determines that the electronic device 201 is in the high temperature state in operation 915, the processor 120 may proceed to operation 925. For example, when the processor 120 (e.g., the BT host 502) detects movement of the electronic device 201 in operation 910 and determines that the electronic device 201 is not in the high temperature state in operation 915, the processor 120 may proceed to operation 920.

In an embodiment, operation 915 may be performed before operation 910 or in place of operation 910. For example, when determining that the electronic device 201 is in the high temperature state, the processor 120 (e.g., the BT host 502) may proceed to operation 925. For example, when determining that the electronic device 201 is not in the high temperature state, the processor 120 (e.g., the BT host 502) may proceed to operation 920.

In operation 920, the processor 120 (e.g., the BT host 502) may determine an adaptive scan mode as the normal mode. In an embodiment, the normal mode may include at least one of enable of the LNA 508, enable of the PA 612, or a high transmission power level.

In operation 925, the processor 120 (e.g., the BT host 502) may determine the adaptive scan mode as the low power mode. In an embodiment, the low power mode may include at least one of disable of the LNA 508, disable of the PA 612, or a low transmission power level.

In operation 930, the processor 120 (e.g., the BT host 502) may generate at least one control command according to the determination of the normal mode or the low power mode. In an embodiment, when the processor 120 (e.g., the BT host 502) determines the normal mode, the at least one control command may be at least one of enable of the LNA 508, enable of the PA 612, or a high transmission power level. In an embodiment, when the processor 120 (e.g., the BT host 502) determines the low power mode, the at least one command may include at least one of disable of the LNA 508, disable of the PA 612, or a low transmission power level. The generated control command may be transmitted to the LNA 508 and/or the BT RF circuit 506 through the BT control module 504 by the processor 120 (e.g., the BT host 502). In an embodiment, the control command may be valid during at least one scan window. For example, according to the at least one control command, the LNA 508 may be disabled despite detection of a CRC error and/or a low RSSI.

In an embodiment, operation 920 and its related operation 930 may be omitted. For example, the processor 120 (e.g., the BT host 502) may not generate a control command (e.g., LNA enable or PA enable) that is not related to reduction of power consumption. When operation 920 is omitted, the LNA 508 and/or the PA 612 may remain at a current setting. For example, the LNA 508 may be running in response to detection of a CRC error and/or a low RSSI.

FIG. 10 is a flowchart illustrating Bluetooth operation control based on a battery level and movement according to an embodiment. At least one of the illustrated operations may be performed by the processor 120 of the electronic device 201. In an embodiment, the illustrated operations may correspond to operations 810 to 820 of FIG. 8. In an embodiment to be described below, the processor 120 may use the battery level of the electronic device 201 to control a Bluetooth operation. In another embodiment, at least one of the illustrated operations may be performed by the BT control module 504.

Referring to FIG. 10, the processor 120 (e.g., the BT host 502) may identify a battery level BAT_LV of the battery (e.g., the battery 189) of the electronic device 201 in operation 1005. In operation 1010, the processor 120 (e.g., the BT host 502) may compare the battery level with a specified threshold TH_BAT. For example, the threshold TH_BAT may be 50%. When the battery level is lower than or equal to the threshold TH_BAT, the processor 120 (e.g., the BT host 502) may determine a threshold TH for detecting a position change as a specified low value TH_L in operation 1015. For example, the threshold TH_L may be 1. When the battery level is higher than the threshold TH_BAT, the processor 120 (e.g., the BT host 502) may determine the threshold TH for detecting a position change as a high value TH_H in operation 1020. For example, the threshold TH_H may be 10.

In operation 1025, the processor 120 (e.g., the BT host 502) may calculate a position change value $\Delta$ based on sensor data (e.g., the sensor data collected in operation 810). The position change value may be a value indicating a position change for a specified time. For example, the position change value may be calculated by <Equation 1> below.

【Equation 1】

$$\Delta = ABS(X+Y+Z-preX-preY-preZ)/delta\_time$$

where (X, Y, Z) is coordinate values indicating a current position of the electronic device 201 obtained based on the sensor data, for example, accelerometer data, and (preX, preY, preZ) is coordinate values indicating a previous position of the electronic device 201 before a specified time delta_time.

The position change value is a value for determining whether the electronic device 201 has moved, and may be calculated based on various sensor data and/or various methods.

In operation 1030, the change value may be compared with the threshold TH (= TH_L or TH_H) determined in operation 1015 or 1020. The processor 120 (e.g., the BT host 502) may proceed to operation 1035 when the change value is greater than the threshold TH, and to operation 1040 when the change value is less than or equal to the threshold TH.

In operation 1035, the processor 120 (e.g., the BT host 502) may determine an adaptive scan mode as the normal mode. In an embodiment, the normal mode may include at least one of enable of the LNA 508, enable of the PA 612, or a high transmission power level.

In operation 1040, the processor 120 (e.g., the BT host 502) may determine the adaptive scan mode as the low power mode. In an embodiment, the low power mode may include at least one of disable of the LNA 508, disable of the PA 612, or a low transmission power level.

In operation 1045, the processor 120 (e.g., the BT host 502) may generate at least one control command based on the normal mode or at least one control command based on the low power mode. In an embodiment, the at least one control command based on the normal mode may include at least one of enable of the LNA 508, enable of the PA 612, or a high transmission power level. In an embodiment, the at least one control command based on the low power mode may include at least one of disable of the LNA 508, disable of the PA 612, or a low transmission power level. The generated control command may be transmitted to the LNA 508 and/or the BT RF circuit 506 through the BT control module 504 by the processor 120 (e.g., the BT host 502). In an embodiment, the control command may be valid during at least one scan window. For example, the LNA 508 may be disabled according to the control command despite detection of a CRC error and/or a low RSSI.

In an embodiment, operation 1035 and its related operation 1045 may be omitted. For example, the processor 120 (e.g., the BT host 502) may not generate a control command (e.g., LNA enable or PA enable) that is not related to reduction of power consumption. When operation 1035 is omitted, the LNA 508 and/or the PA 612 may remain at a current setting. For example, the LNA 508 may be running in response to detection of a CRC error and/or a low RSSI.

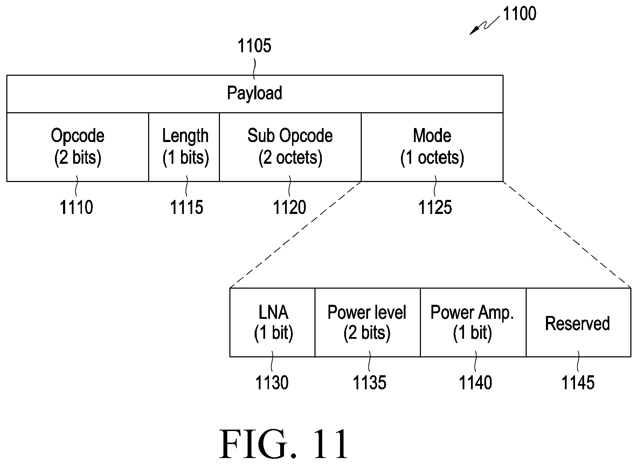

FIG. 11 is a diagram illustrating a control command generated by the electronic device 201 according to an embodiment. For example, an illustrated control command 1100 may be generated by the processor 120 (e.g., the BT host 502) or the BT control module 504 in operation 930 of FIG. 9 or operation 1045 of FIG. 10.

Referring to FIG. 11, the control command 1100 may include payload 1105, and the payload 1105 may include at least one of an Opcode field 1110 (e.g., 2 bits) having a unique value identifying the control command 1100, a sub Opcode field 1120 (e.g., 2 octets), a Length field 1115 (e.g., 1 bit) indicating the length of the payload 1105, or a Mode field 1125 (e.g., 1 octet) related to an adaptive scan mode.

In an embodiment, the Mode field 1125 may include at least one of an LNA field 1130 (e.g., 1 bit) for indicating enable/disable of the LNA 508, a Power level field 1135 (e.g., 2 bits) for indicating a transmission power level to the BT RF circuit 506, or a Power Amp field 1140 (e.g., 1 bit) for indicating enable/disable of the PA 612. For example, the Power level field 1135 may indicate any one of high, medium, or low as the transmission power level. In an embodiment, at least one of the remaining bits of the Mode field 1125 may be used to indicate a Bluetooth performance factor (e.g., Bluetooth scan mode or at least one parameter related to the Bluetooth scan mode) for controlling a Bluetooth operation (e.g., the BT RF circuit 506).

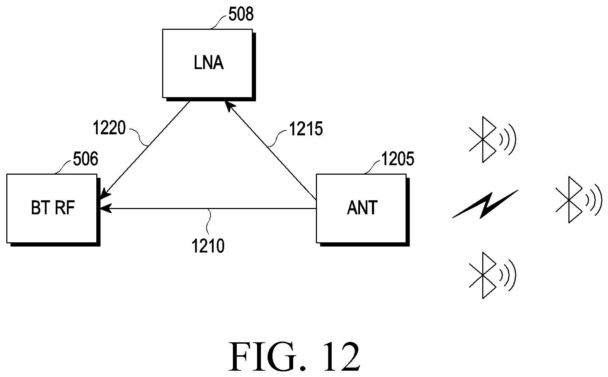

FIG. 12 is a diagram illustrating control of the LNA 508 for a Bluetooth operation according to an embodiment.

Referring to FIG. 12, The LNA 508 may be configured to amplify a signal 1215 (e.g., Bluetooth signals including advertising packets from one or more external electronic devices) received through an antenna 1205 and transmit the amplified signal 1220 to the BT RF circuit 506, while the LNA 508 is enabled. When the LNA 508 is disabled, a signal 1210 received through the antenna 1205 may be transmitted to the BT RF circuit 506 without amplification. When the LNA 508 is disabled, a received signal is not amplified, and thus the resulting decreased RF sensitivity may degrade BLE scan performance for peripheral external electronic devices. That is, a BLE scan for an external electronic device may be failed. However, because the LNA 508 operates by consuming additional power of the electronic device 201, efficient control for operating the LNA 508 may be required.

In an embodiment, when detecting a CRC error in a Bluetooth signal (e.g., the signal 1215) and/or when detecting that the signal 1215 has an RSSI less than a threshold, the BT control module 504 may enable the LNA 508.

In an embodiment, the LNA 508 may be enabled or disabled according to a control command generated by at least one of the above-described embodiments (e.g., in operation 740, operation 930, or operation 1045). In an embodiment, the LNA 508 may be disabled despite a CRC error or a low RSSI, while the electronic device 201 is not moving (e.g., NO in operation 910 or YES in operation 1030). Accordingly, the power consumption of the electronic device 201 may be reduced.

An electronic device and a method of operating the same according to embodiments of the disclosure may reduce the power consumption of a component related to a Bluetooth RF operation, such as an LNA or a PA.

An electronic device and a method of operating the same according to embodiments of the disclosure may increase battery efficiency through efficient control of a hardware module during a BLE scan.

An electronic device and a method of operating the same according to embodiments of the disclosure may prevent unnecessary power consumption caused by an operation of the LNA in a situation where a BLE scan is not needed.

According to an embodiment, the electronic device 201 may include the sensor module 176, the wireless communication module 192 including the LNA 508 and the Bluetooth RF circuit 506, and the at least one processor 502 or 504 operatively connected to the sensor module and the wireless communication module. The at least one processor may be configured to obtain sensor data related to movement of the electronic device from the sensor module, determine an adaptive scan mode related to the LNA and/or the Bluetooth RF circuit based on the sensor data, and control the LNA and/or the Bluetooth RF circuit according to the adaptive scan mode.

According to an embodiment, the sensor data may include at least one of motion sensor data, position sensor data, or environment sensor data.

According to an embodiment, the adaptive scan mode may include a low power mode and a normal mode, and the at least one processor may be configured to determine to operate the wireless communication module in the low power mode, when determining based on the sensor data that the movement of the electronic device is not detected, and determine to operate the wireless communication module in the normal mode, when determining based on the sensor data that the movement of the electronic device is detected.

According to an embodiment, an operation in the low power mode may include at least one of disabling the LNA, disabling the PA 612 included in the Bluetooth RF circuit, or setting a transmission power level of the Bluetooth RF circuit to a specified first value, and an operation in the normal mode may include at least one of enabling the LNA, enabling the PA, or setting the transmission power level of the Bluetooth RF circuit to a second value larger than the first value.

According to an embodiment, the at least one processor may be configured to control the wireless communication module to disable the LNA, when determining based on the sensor data that the movement of the electronic device is not detected.

According to an embodiment, the at least one processor may be configured to control the wireless communication module to disable a power amplifier included in the Bluetooth RF circuit, when determining based on the sensor data that the movement of the electronic device is not detected.

According to an embodiment, the at least one processor may be configured to transmit a control command indicating a transmission power level of the Bluetooth RF circuit determined based on the sensor data to the wireless communication module.

According to an embodiment, the at least one processor may be configured to calculate a current position of the electronic device based on the sensor data, calculate a position change value by comparing the current position with a previous position before a predetermined time, and control the wireless communication module to disable the LNA, when the position change value is less than or equal to a specified threshold.

According to an embodiment, the threshold may be determined to be a first value, when a battery level of the electronic device is lower than or equal to a specified battery threshold, and to a second value larger than the first value, when the battery level of the electronic device is higher than the battery threshold.

According to an embodiment, the adaptive scan mode may include a low power mode and a normal mode, and the at least one processor may be configured to detect the movement of the electronic device based on motion sensor data and/or position sensor data included in the sensor data, determine to operate the wireless communication module in the low power mode, when determining that the movement of the electronic device is not detected, determine a temperature of the electronic device based on temperature sensor data included in the sensor data, when determining that the movement of the electronic device is detected, determine to operate the wireless communication module in the low power mode, when the temperature of the electronic device is higher than a specified threshold, and control the wireless communication module to disable the LNA according to the determination of the low power mode.

According to an embodiment, a method of operating an electronic device including an LNA and a Bluetooth RF circuit may include obtaining sensor data related to movement of the electronic device from a sensor module (operation 810). The method may include determining an adaptive scan mode related to the LNA and/or the Bluetooth RF circuit based on the sensor data (operation 820). The method may include controlling the LNA and/or the Bluetooth RF circuit according to the adaptive scan mode (operation 825).

According to an embodiment, the sensor data may include at least one of motion sensor data, position sensor data, or environment sensor data.

According to an embodiment, the adaptive scan mode may include a low power mode and a normal mode, and the determining an adaptive scan mode may include determining to operate a wireless communication module in the low power mode, when it is determined based on the sensor data that the movement of the electronic device is not detected (operation 925), and determining to operate the wireless communication module in the normal mode, when it is determined based on the sensor data that the movement of the electronic device is detected (operation 920).

According to an embodiment, an operation in the low power mode may include at least one of disabling the LNA, disabling a PA included in the Bluetooth RF circuit, or setting a transmission power level of the Bluetooth RF circuit to a specified first value, and an operation in the normal mode may include at least one of enabling the LNA, enabling the PA, or setting the transmission power level of the Bluetooth RF circuit to a second value larger than the first value.

According to an embodiment, the controlling may include disabling the LNA, when it is determined based on the sensor data that the movement of the electronic device is not detected.

According to an embodiment, the controlling may include disabling a PA included in the Bluetooth RF circuit, when it is determined based on the sensor data that the movement of the electronic device is not detected.

According to an embodiment, the determining an adaptive scan mode may include determining a transmission power level of the Bluetooth RF circuit based on the sensor data.

According to an embodiment, the determining an adaptive scan mode may include calculating a current position of the electronic device based on the sensor data, calculating a position change value by comparing the current position with a previous position before a predetermined time (operation 1025), and determining to disable the LNA, when the position change value is less than or equal to a specified threshold (operation 1040).

According to an embodiment, the threshold may be determined to be a first value, when a battery level of the electronic device is lower than or equal to a specified battery threshold, and to a second value larger than the first value, when the battery level of the electronic device is higher than the battery threshold.

According to an embodiment, the adaptive scan mode may include a low power mode and a normal mode, and the determining an adaptive scan mode may include detecting the movement of the electronic device based on motion sensor data and/or position sensor data included in the sensor data, determining to operate the wireless communication module in the low power mode, when determining that the movement of the electronic device is not detected (operation 925), determining a temperature of the electronic device based on temperature sensor data included in the sensor data, when determining that the movement of the electronic device is detected (operation 915), determining to operate the wireless communication module in the low power mode, when the temperature of the electronic device is higher than a specified threshold (operation 925), and determining to operate the wireless communication module in the normal mode, when the movement of the electronic device is detected and the temperature of the electronic device is not higher than the threshold (operation 920).

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the disclosure and the terms used therein are not intended to limit the technological features set forth herein to particular embodiments and include various changes or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C", may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with", "coupled to", "connected with", or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, logic, logic block, part, or circuitry. A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term 'non-transitory' simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

**Claims**

1. An electronic device (101, 201) comprising:

    sensor circuitry (176) including a motion sensor (512) and a temperature sensor;
    wireless communication circuitry (192) including a low noise amplifier, LNA, and a Bluetooth radio frequency, RF, circuit;
    at least one processor (120) operatively connected to the sensor circuitry and the wireless communication circuitry; and
    memory (132) storing instructions which, when executed by the at least one processor, cause the electronic device to:

        obtain sensor data related to movement of the electronic device and a temperature of the electronic device from the sensor circuitry,
        determine whether a position of the electronic device has changed and whether a temperature of the device has changed based on the sensor data,
        determine to perform a Bluetooth scan operation in a normal mode or a low power mode according to whether the position of the electronic device has changed and whether the temperature of the device has changed, and
        control the LNA and/or the Bluetooth RF circuit according to the determined mode of the Bluetooth scan operation,
        wherein the normal mode is a mode in which the electronic device operates with an increased scan sensitivity for Bluetooth devices compared to the low power mode.

2. The electronic device (101, 201) of claim 1, wherein the instructions cause the electronic device to determine to operate the wireless communication circuitry (192) in the low power mode, when determining based on the sensor data that the movement of the electronic device is not detected, and determine to operate the wireless communication circuitry in the normal mode, when determining based on the sensor data that the movement of the electronic device is detected.

3. The electronic device (101, 201) of claim 2, wherein an operation in the low power mode includes at least one of disabling the LNA, disabling a power amplifier included in the Bluetooth RF circuit, or setting a transmission power level of the Bluetooth RF circuit to a specified first value, and wherein an operation in the normal mode includes at least one of enabling the LNA, enabling the power amplifier, or setting the transmission power level of the Bluetooth RF circuit to a second value larger than the first value.

4. The electronic device (101, 201) of any of claims 1 to 3, wherein the instructions cause the electronic device to control the wireless communication circuitry (192) to disable the LNA, when determining based on the sensor data that the movement of the electronic device is not detected.

5. The electronic device (101, 201) of any of claims 1 to 4, wherein the instructions cause the electronic device to control the wireless communication circuitry (192) to disable a power amplifier included in the Bluetooth RF circuit, when determining based on the sensor data that the movement of the electronic device is not detected.

6. The electronic device (101, 201) of any of claims 1 to 5, wherein the instructions cause the electronic device to:

calculate a current position of the electronic device based on the sensor data,
calculate a position change value by comparing the current position with a previous position before a predetermined time, and
control the wireless communication circuitry (192) to disable the LNA, when the position change value is less than or equal to a specified threshold.

7. The electronic device (101, 201) of any of claims 1 to 6, wherein the instructions cause the electronic device to detect the movement of the electronic device based on motion sensor data and/or position sensor data included in the sensor data, determine to operate the wireless communication circuitry (192) in the low power mode, when determining that the movement of the electronic device is not detected, determine the temperature of the electronic device based on temperature sensor data included in the sensor data, when determining that the movement of the electronic device is detected, determine to operate the wireless communication circuitry in the low power mode, when the temperature of the electronic device is higher than a specified threshold, and control the wireless communication circuitry to disable the LNA according to the determination of the low power mode.

8. A method of operating an electronic device (101, 201) including a low noise amplifier, LNA, and a Bluetooth radio frequency, RF, circuit, the method comprising:

obtaining sensor data related to movement of the electronic device and a temperature of the electronic device from a sensor circuitry including a motion sensor and a temperature sensor,
determining whether a position of the electronic device has changed and whether a temperature of the device has changed based on the sensor data,
determining to perform a Bluetooth scan operation in a normal mode or a low power mode according to whether the position of the electronic device has changed and whether the temperature of the device has changed, and controlling the LNA and/or the Bluetooth RF circuit according to the determined mode of the Bluetooth scan operation,
wherein the normal mode is a mode in which the electronic device operates with an increased scan sensitivity for Bluetooth devices compared to the low power mode.

9. The method of claim 8, wherein the determining an adaptive scan mode comprises:

determining to operate a wireless communication circuitry (192) in the low power mode, when it is determined based on the sensor data that the movement of the electronic device is not detected, and
determining to operate the wireless communication circuitry in the normal mode, when it is determined based on the sensor data that the movement of the electronic device is detected.

10. The method of claim 9, wherein an operation in the low power mode includes at least one of disabling the LNA, disabling a power amplifier included in the Bluetooth RF circuit, or setting a transmission power level of the Bluetooth RF circuit to a specified first value, and
wherein an operation in the normal mode includes at least one of enabling the LNA, enabling the power amplifier, or setting the transmission power level of the Bluetooth RF circuit to a second value larger than the first value.

11. The method of any of claims 8 to 10, wherein the controlling comprises disabling the LNA, when it is determined based on the sensor data that the movement of the electronic device is not detected.

12. The method of any of claims 8 to 11, wherein the controlling comprises disabling a power amplifier included in the Bluetooth RF circuit, when it is determined based on the sensor data that the movement of the electronic device is not detected.

13. The method of any of claims 8 to 12, wherein the determining an adaptive scan mode comprises:

detecting the movement of the electronic device based on motion sensor data and/or position sensor data included in the sensor data,

determining to operate a wireless communication circuitry (192) in the low power mode, when it is determined that the movement of the electronic device is not detected,

determining the temperature of the electronic device based on temperature sensor data included in the sensor data, when it is determined that the movement of the electronic device is detected,

determining to operate the wireless communication circuitry in the low power mode, when the temperature of the electronic device is higher than a specified threshold, and

determining to operate the wireless communication module in the normal mode, when the movement of the electronic device is detected and the temperature of the electronic device is not higher than the threshold.

14. A non-transitory computer-readable storage medium storing instructions which, when executed by at least one processor (120) of an electronic device (101, 201), cause the electronic device to perform the method of any of claims 8 to 13.

**Patentansprüche**

1. Elektronische Vorrichtung (101, 201), umfassend:

eine Sensorschaltung (176), die einen Bewegungssensor (512) und einen Temperatursensor enthält;

eine drahtlose Kommunikationsschaltung (192), die einen rauscharmen Verstärker, LNA, und eine Bluetooth-Hochfrequenzschaltung, RF-Schaltung, enthält;

mindestens einen Prozessor (120), der mit der Sensorschaltung und der drahtlosen Kommunikationsschaltung wirkverbunden ist; und

einen Speicher (132), der Anweisungen speichert, die, wenn sie durch den mindestens einen Prozessor ausgeführt werden, die elektronische Vorrichtung zu Folgendem veranlassen:

Erlangen von Sensordaten in Bezug auf eine Bewegung der elektronischen Vorrichtung und eine Temperatur der elektronischen Vorrichtung von der Sensorschaltung,

Bestimmen, ob sich eine Position der elektronischen Vorrichtung geändert hat und ob sich eine Temperatur der Vorrichtung geändert hat, basierend auf den Sensordaten, Bestimmen, einen Bluetooth-Abtastvorgang in einem Normalmodus oder einem Niedrigleistungsmodus durchzuführen, je nachdem, ob sich die Position der elektronischen Vorrichtung geändert hat und ob sich die Temperatur der Vorrichtung geändert hat, und Steuern des LNA und/oder der Bluetooth-RF-Schaltung gemäß dem bestimmten Modus des Bluetooth-Abtastvorgangs,

wobei der Normalmodus ein Modus ist, in dem die elektronische Vorrichtung mit einer erhöhten Abtastempfindlichkeit für Bluetooth-Vorrichtungen im Vergleich zu dem Niedrigleistungsmodus arbeitet.

2. Elektronische Vorrichtung (101, 201) nach Anspruch 1, wobei die Anweisungen die elektronische Vorrichtung dazu veranlassen, zu bestimmen, die drahtlose Kommunikationsschaltung (192) in dem Niedrigleistungsmodus zu betreiben, wenn basierend auf den Sensordaten bestimmt ist, dass die Bewegung der elektronischen Vorrichtung nicht erkannt ist, und zu bestimmen, die drahtlose Kommunikationsschaltung in dem Normalmodus zu betreiben, wenn basierend auf den Sensordaten bestimmt ist, dass die Bewegung der elektronischen Vorrichtung erkannt ist.

3. Elektronische Vorrichtung (101, 201) nach Anspruch 2, wobei ein Betrieb in dem Niedrigleistungsmodus mindestens eines von Deaktivieren des LNA, Deaktivieren eines Leistungsverstärkers, der in der Bluetooth-RF-Schaltung enthalten ist, oder Einstellen eines Übertragungsleistungspegels der Bluetooth-RF-Schaltung auf einen spezifizierten ersten Wert enthält, und

wobei ein Betrieb in dem Normalmodus mindestens eines von Aktivieren des LNA, Aktivieren des Leistungsverstärkers oder Einstellen des Übertragungsleistungspegels der Bluetooth-RF-Schaltung auf einen zweiten Wert, der größer als der erste Wert ist, enthält.

4. Elektronische Vorrichtung (101, 201) nach einem der Ansprüche 1 bis 3, wobei die Anweisungen die elektronische Vorrichtung dazu veranlassen, die drahtlose Kommunikationsschaltung (192) zu steuern, um den LNA zu deaktivieren, wenn basierend auf den Sensordaten bestimmt ist, dass die Bewegung der elektronischen Vorrichtung nicht erkannt ist.

5. Elektronische Vorrichtung (101, 201) nach einem der Ansprüche 1 bis 4, wobei die Anweisungen die elektronische Vorrichtung dazu veranlassen, die drahtlose Kommunikationsschaltung (192) zu steuern, um einen Leistungsverstärker, der in der Bluetooth-RF-Schaltung enthalten ist, zu deaktivieren, wenn basierend auf den Sensordaten bestimmt ist, dass die Bewegung der elektronischen Vorrichtung nicht erkannt ist.

6. Elektronische Vorrichtung (101, 201) nach einem der Ansprüche 1 bis 5, wobei die Anweisungen die elektronische Vorrichtung zu Folgendem veranlassen:

Berechnen einer aktuellen Position der elektronischen Vorrichtung basierend auf den Sensordaten, Berechnen eines Positionsänderungswerts durch Vergleichen der aktuellen Position mit einer vorherigen Position vor einem vorbestimmten Zeitpunkt, und
Steuern der drahtlosen Kommunikationsschaltung (192), um den LNA zu deaktivieren, wenn der Positionsänderungswert kleiner oder gleich einem spezifizierten Schwellenwert ist.

7. Elektronische Vorrichtung (101, 201) nach einem der Ansprüche 1 bis 6, wobei die Anweisungen die elektronische Vorrichtung dazu veranlassen, die Bewegung der elektronischen Vorrichtung basierend auf Bewegungssensordaten und/oder Positionssensordaten, die in den Sensordaten enthalten sind, zu erkennen, zu bestimmen, die drahtlose Kommunikationsschaltung (192) in dem Niedrigleistungsmodus zu betreiben, wenn bestimmt ist, dass die Bewegung der elektronischen Vorrichtung nicht erkannt ist, die Temperatur der elektronischen Vorrichtung basierend auf Temperatursensordaten, die in den Sensordaten enthalten sind, zu bestimmen, wenn bestimmt ist, dass die Bewegung der elektronischen Vorrichtung erkannt ist, zu bestimmen, die drahtlose Kommunikationsschaltung in dem Niedrigleistungsmodus zu betreiben, wenn die Temperatur der elektronischen Vorrichtung höher als ein spezifizierter Schwellenwert ist, und die drahtlose Kommunikationsschaltung zu steuern, um den LNA gemäß der Bestimmung des Niedrigleistungsmodus zu deaktivieren.

8. Verfahren zum Betreiben einer elektronischen Vorrichtung (101, 201), die einen rauscharmen Verstärker, LNA, und eine Bluetooth-Hochfrequenz-Schaltung, RF-Schaltung, enthält, wobei das Verfahren Folgendes umfasst:

Erlangen von Sensordaten in Bezug auf eine Bewegung der elektronischen Vorrichtung und eine Temperatur der elektronischen Vorrichtung von einer Sensorschaltung, die einen Bewegungssensor und einen Temperatursensor enthält,
Bestimmen, ob sich eine Position der elektronischen Vorrichtung geändert hat und ob sich eine Temperatur der Vorrichtung geändert hat, basierend auf den Sensordaten, Bestimmen, einen Bluetooth-Abtastvorgang in einem Normalmodus oder einem Niedrigleistungsmodus durchzuführen, je nachdem, ob sich die Position der elektronischen Vorrichtung geändert hat und ob sich die Temperatur der Vorrichtung geändert hat, und
Steuern des LNA und/oder der Bluetooth-RF-Schaltung gemäß dem bestimmten Modus des Bluetooth-Abtastvorgangs,
wobei der Normalmodus ein Modus ist, in dem die elektronische Vorrichtung mit einer erhöhten Abtastempfindlichkeit für Bluetooth-Vorrichtungen im Vergleich zu dem Niedrigleistungsmodus arbeitet.

9. Verfahren nach Anspruch 8, wobei das Bestimmen eines adaptiven Abtastmodus Folgendes umfasst:

Bestimmen, eine drahtlose Kommunikationsschaltung (192) in dem Niedrigleistungsmodus zu betreiben, wenn basierend auf den Sensordaten bestimmt ist, dass die Bewegung der elektronischen Vorrichtung nicht erkannt ist, und
Bestimmen, die drahtlose Kommunikationsschaltung in dem Normalmodus zu betreiben, wenn basierend auf den Sensordaten bestimmt ist, dass die Bewegung der elektronischen Vorrichtung erkannt ist.

10. Verfahren nach Anspruch 9, wobei ein Betrieb in dem Niedrigleistungsmodus mindestens eines von Deaktivieren des LNA, Deaktivieren eines Leistungsverstärkers, der in der Bluetooth-RF-Schaltung enthalten ist, oder Einstellen eines Übertragungsleistungspegels der Bluetooth-RF-Schaltung auf einen spezifizierten ersten Wert enthält, und
wobei ein Betrieb in dem Normalmodus mindestens eines von Aktivieren des LNA, Aktivieren des Leistungsverstärkers oder Einstellen des Übertragungsleistungspegels der Bluetooth-RF-Schaltung auf einen zweiten Wert, der größer als der erste Wert ist, enthält.

11. Verfahren nach einem der Ansprüche 8 bis 10, wobei das Steuern Deaktivieren des LNA umfasst, wenn basierend auf den Sensordaten bestimmt ist, dass die Bewegung der elektronischen Vorrichtung nicht erkannt ist.

12. Verfahren nach einem der Ansprüche 8 bis 11, wobei das Steuern Deaktivieren eines Leistungsverstärkers, der in der Bluetooth-RF-Schaltung enthalten ist, umfasst, wenn basierend auf den Sensordaten bestimmt ist, dass die Bewegung der elektronischen Vorrichtung nicht erkannt ist.

13. Verfahren nach einem der Ansprüche 8 bis 12, wobei das Bestimmen eines adaptiven Abtastmodus Folgendes umfasst:

Erkennen der Bewegung der elektronischen Vorrichtung basierend auf Bewegungssensordaten und/oder Positionssensordaten, die in den Sensordaten enthalten sind,
Bestimmen, eine drahtlose Kommunikationsschaltung (192) in dem Niedrigleistungsmodus zu betreiben, wenn bestimmt ist, dass die Bewegung der elektronischen Vorrichtung nicht erkannt ist, Bestimmen der Temperatur der elektronischen Vorrichtung basierend auf Temperatursensordaten, die in den Sensordaten enthalten sind, wenn bestimmt ist, dass die Bewegung der elektronischen Vorrichtung erkannt ist,
Bestimmen, die drahtlose Kommunikationsschaltung in dem Niedrigleistungsmodus zu betreiben, wenn die Temperatur der elektronischen Vorrichtung höher als ein spezifizierter Schwellenwert ist, und
Bestimmen, das drahtlose Kommunikationsmodul in dem Normalmodus zu betreiben, wenn die Bewegung der elektronischen Vorrichtung erkannt ist und die Temperatur der elektronischen Vorrichtung nicht höher als der Schwellenwert ist.

14. Nichtflüchtiges computerlesbares Speichermedium, das Anweisungen speichert, die bei Ausführung durch mindestens einen Prozessor (120) einer elektronischen Vorrichtung (101, 201) die elektronische Vorrichtung dazu veranlassen, das Verfahren nach einem der Ansprüche 8 bis 13 durchzuführen.

## Revendications

1. Dispositif électronique (101, 201) comprenant :

un montage de circuits de capteur (176) comprenant un capteur de mouvement (512) et un capteur de température ;
un montage de circuits de communication sans fil (192) comprenant un amplificateur à faible bruit, LNA, et un circuit radiofréquence Bluetooth, RF ;
au moins un processeur (120) fonctionnellement connecté au montage de circuits de capteur et au montage de circuits de communication sans fil ; et
une mémoire (132) stockant des instructions qui, lorsqu'elles sont exécutées par l'au moins un processeur, amènent le dispositif électronique à :

obtenir des données de capteur liées au mouvement du dispositif électronique et à une température du dispositif électronique à partir du montage de circuits de capteur,
déterminer si une position du dispositif électronique a changé et si une température du dispositif a changé sur la base des données de capteur,
déterminer de réaliser une opération de balayage Bluetooth en mode normal ou en mode à faible puissance selon que la position du dispositif électronique a changé ou non et que la température du dispositif a changé ou non, et
commander le LNA et/ou le circuit RF Bluetooth selon le mode déterminé de l'opération de balayage Bluetooth,
ledit mode normal étant un mode dans lequel le dispositif électronique fonctionne avec une sensibilité de balayage accrue pour des dispositifs Bluetooth par rapport au mode à faible consommation d'énergie.

2. Dispositif électronique (101, 201) de la revendication 1, lesdites instructions amenant le dispositif électronique à déterminer de faire fonctionner le montage de circuits de communication sans fil (192) dans le mode à faible puissance, lors de la détermination sur la base des données de capteur que le mouvement du dispositif électronique n'est pas détecté, et à déterminer de faire fonctionner le montage de circuits de communication sans fil dans le mode normal, lors de la détermination sur la base des données de capteur que le mouvement du dispositif électronique est détecté.

3. Dispositif électronique (101, 201) de la revendication 2, un fonctionnement dans le mode à faible puissance comprenant au moins un parmi la désactivation du LNA, la désactivation d'un amplificateur de puissance compris dans le circuit RF Bluetooth, ou le réglage d'un niveau de puissance de transmission du circuit RF Bluetooth à une première valeur spécifiée, et

un fonctionnement dans le mode normal comprenant au moins un parmi l'activation du LNA, l'activation de l'amplificateur de puissance, ou le réglage du niveau de puissance de transmission du circuit RF Bluetooth à une seconde valeur supérieure à la première valeur.

4. Dispositif électronique (101, 201) de l'une quelconque des revendications 1 à 3, lesdites instructions amenant le dispositif électronique à commander le montage de circuits de communication sans fil (192) pour désactiver le LNA, lors de la détermination sur la base des données de capteur que le mouvement du dispositif électronique n'est pas détecté.

5. Dispositif électronique (101, 201) de l'une quelconque des revendications 1 à 4, lesdites instructions amenant le dispositif électronique à commander le montage de circuits de communication sans fil (192) pour désactiver un amplificateur de puissance compris dans le circuit RF Bluetooth, lors de la détermination sur la base des données de capteur que le mouvement du dispositif électronique n'est pas détecté.

6. Dispositif électronique (101, 201) de l'une quelconque des revendications 1 à 5, lesdites instructions amenant le dispositif électronique à :

   calculer une position actuelle du dispositif électronique sur la base des données de capteur,
   calculer une valeur de changement de position en comparant la position actuelle avec une position précédente avant un temps prédéfini, et
   commander le montage de circuits de communication sans fil (192) pour désactiver le LNA, lorsque la valeur de changement de position est inférieure ou égale à un seuil spécifié.

7. Dispositif électronique (101, 201) de l'une quelconque des revendications 1 à 6, lesdites instructions amenant le dispositif électronique à détecter le mouvement du dispositif électronique sur la base des données de capteur de mouvement et/ou des données de capteur de position comprises dans les données de capteur, à déterminer de faire fonctionner le montage de circuits de communication sans fil (192) dans le mode à faible puissance, lors de la détermination que le mouvement du dispositif électronique n'est pas détecté, à déterminer la température du dispositif électronique sur la base des données de capteur de température comprises dans les données de capteur, lors de la détermination que le mouvement du dispositif électronique est détecté, à déterminer de faire fonctionner le montage de circuits de communication sans fil dans le mode à faible puissance, lorsque la température du dispositif électronique est supérieure à un seuil spécifié, et à commander le montage de circuits de communication sans fil pour désactiver le LNA selon la détermination du mode à faible puissance.

8. Procédé de fonctionnement d'un dispositif électronique (101, 201) comprenant un amplificateur à faible bruit, LNA, et un circuit radiofréquence, RF, Bluetooth, le procédé comprenant :

   l'obtention de données de capteur liées au mouvement du dispositif électronique et à une température du dispositif électronique à partir d'un montage de circuits de capteur comprenant un capteur de mouvement et un capteur de température,
   la détermination pour savoir si une position du dispositif électronique a changé et si une température du dispositif a changé sur la base des données de capteur,
   la détermination de réaliser une opération de balayage Bluetooth dans un mode normal ou un mode à faible puissance selon que la position du dispositif électronique a changé ou non et que la température du dispositif a changé ou non, et
   la commande du LNA et/ou du circuit RF Bluetooth selon le mode déterminé de l'opération de balayage Bluetooth, ledit mode normal étant un mode dans lequel le dispositif électronique fonctionne avec une sensibilité de balayage accrue pour des dispositifs Bluetooth par rapport au mode à faible consommation d'énergie.

9. Procédé de la revendication 8, ladite détermination d'un mode de balayage adaptatif comprenant :

   la détermination de faire fonctionner un montage de circuits de communication sans fil (192) dans le mode à faible puissance, lorsque, sur la base des données de capteur, la non détection du mouvement du dispositif électronique est déterminée, et
   la détermination de faire fonctionner le montage de circuits de communication sans fil dans le mode normal, lorsque, sur la base des données de capteur, la détection du mouvement du dispositif électronique est déterminée.

**10.** Procédé de la revendication 9, un fonctionnement dans le mode à faible puissance comprenant au moins un parmi la désactivation du LNA, la désactivation d'un amplificateur de puissance compris dans le circuit RF Bluetooth, ou le réglage d'un niveau de puissance de transmission du circuit RF Bluetooth à une première valeur spécifiée, et un fonctionnement dans le mode normal comprenant au moins un parmi l'activation du LNA, l'activation de l'amplificateur de puissance, ou le réglage du niveau de puissance de transmission du circuit RF Bluetooth à une seconde valeur supérieure à la première valeur.

**11.** Procédé de l'une quelconque des revendications 8 à 10, ladite commande comprenant la désactivation du LNA, lorsque , sur la base des données de capteur, la non détection du mouvement du dispositif électronique est déterminée.

**12.** Procédé de l'une quelconque des revendications 8 à 11, ladite commande comprenant la désactivation d'un amplificateur de puissance compris dans le circuit RF Bluetooth, lorsque, sur la base des données de capteur, la non détection du mouvement du dispositif électronique est déterminée.

**13.** Procédé de l'une quelconque des revendications 8 à 12, ladite détermination d'un mode de balayage adaptatif comprenant :

la détection du mouvement du dispositif électronique sur la base de données de capteur de mouvement et/ou de données de capteur de position comprises dans les données de capteur,
la détermination de faire fonctionner un montage de circuits de communication sans fil (192) dans le mode à faible puissance, lorsque la non détection du mouvement du dispositif électronique est déterminée,
la détermination de la température du dispositif électronique sur la base des données de capteur de température comprises dans les données de capteur, lorsque la détection du mouvement du dispositif électronique est déterminée,
la détermination de faire fonctionner le montage de circuits de communication sans fil dans le mode à faible puissance, lorsque la température du dispositif électronique est supérieure à un seuil spécifié, et
la détermination de faire fonctionner le module de communication sans fil dans le mode normal, lorsque le mouvement du dispositif électronique est détecté et que la température du dispositif électronique n'est pas supérieure au seuil.

**14.** Support de stockage non transitoire lisible par ordinateur stockant des instructions qui, lorsqu'elles sont exécutées par au moins un processeur (120) d'un dispositif électronique (101, 201), amènent le dispositif électronique à réaliser le procédé de l'une quelconque des revendications 8 à 13.

FIG. 1

FIG. 2

FIG. 3

FIG. 4

FIG. 5

FIG. 6

705 — BLE scan start (full scan)

176 Sensor module

710 — sensor data open

715 — sensor data

200ms

sensor data close — 720

Analyze sensor data — 725

Determine operation mode — 730

502 BT host

504 BT control module

506 BT RF module

control command [PWR, PA] — 735

508 LNA

control command [LNA] — 740

FIG. 7

Start

805

BLE scan started? — No

Yes

Collect sensor data — 810

Analyze sensor data — 815

Determine adaptive scan mode — 820

Transmit control command — 825

End

# FIG. 8

```
                          ┌─────────────┐
                          │    Start    │
                          └─────────────┘
                                 │
                                 ▼
                    ┌──────────────────────────┐
                    │   Compare current position │─── 905
                    │    with previous position  │
                    └──────────────────────────┘
                                 │
                                 ▼                    910
              Yes      ╱◇───────────────◇╲      No
          ┌────────────  Movement detected?  ────────────┐
          │            ╲◇───────────────◇╱               │
          │                                              │
          ▼              915                             │
    ╱◇───────────◇╲          Yes                         │
   ╱ High temperature ◇──────────────┐                   │
   ╲     state?      ╱               │                   │
    ╲◇───────────◇╱                  │                   │
          │ No                       │                   │
          ▼                          ▼                   ▼
  ┌─────────────────────┐      ┌─────────────────────┐
  │ Determine normal mode │     │ Determine low power mode │
  │ (LNA ON, PA ON, HIGH PWR)│   │ (LNA OFF, PA OFF, LOW PWR)│─── 925
  └─────────────────────┘      └─────────────────────┘
          │          920                │
          └───────────────┬─────────────┘
                          ▼
              ┌──────────────────────┐
              │ Generate control command │─── 930
              └──────────────────────┘
                          │
                          ▼
                    ┌─────────┐
                    │   End   │
                    └─────────┘
```

# FIG. 9

Start

Identify battery level (BAT_LV) — 1005

1010

Yes ← BAT_LV <= TH_BAT ? → No

TH = TH_L — 1015

TH = TH_H — 1020

Calculate position change value (Δ) from sensor data — 1025

1030

No ← Δ <= TH ? → Yes

Determine normal mode (ex. LNA ON) — 1035

Determine lower power mode (ex. LNA OFF) — 1040

Generate control command — 1045

End

FIG. 10

1100

1105

| Payload | | | |
|---|---|---|---|
| Opcode<br>(2 bits) | Length<br>(1 bits) | Sub Opcode<br>(2 octets) | Mode<br>(1 octets) |

1110      1115      1120      1125

| LNA<br>(1 bit) | Power level<br>(2 bits) | Power Amp.<br>(1 bit) | Reserved |
|---|---|---|---|

1130      1135      1140      1145

# FIG. 11

FIG. 12

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2014171053 A1
- WO 2021198936 A1
- US 9936456 B1